# EUROPEAN PATENT APPLICATION

(11) **EP 4 786 232 A1**
(43) Date of publication of application: **05.08.2026**
(21) Application number: 24881721.5
(22) Date of filing: 25.10.2024
(51) Int. Cl.: B60J 1/02, B32B 17/06, C03C 27/12

(54) **BLACK-EDGED DISPLAY VEHICLE WINDOW AND VEHICLE**

(30) Priority: 27.10.2023 CN 202311407260
(71) Applicant: Fuyao Glass Industry Group Co., Ltd., Fuqing, Fujian 350300 (CN)
(72) Inventor: LIN, Weida, Fujian 350300 (CN); CHEN, Hongwei, Fujian 350300 (CN); WU, Shenggui, Fujian 350300 (CN)
(74) Representative: Gill Jennings & Every LLP
(86) International application number: PCT/CN2024/127226
(87) International publication number: WO 2025/087360

(57) **Abstract**

The present application relates to the technical field of vehicle windows, and particularly relates to a black-edged display vehicle window and a vehicle. The black-edged display vehicle window comprises a glass body (10) and a functional reflecting element (20), wherein the functional reflecting element (20) is arranged in a bottom shaded area (1021) of the glass body (10); a display area and a non-display area are provided in the bottom shaded area (1021); and the display area has a first reflectivity RL1 regarding projected light, and the non-display area has a second reflectivity RL2 regarding visible light, with the ratio of the first reflectivity RL1 to the second reflectivity RL2 satisfying RL1/RL2≥3. The black-edged display vehicle window provided by the present application can partially or even completely replace conventional instrument panels, allowing the driver to have a better field of view and spend more time observing external conditions; moreover, necessary driver-assistance information can be more easily obtained, thereby significantly improving the driving safety. In addition, by means of using the bottom shaded area (1021) as an image display background, external ambient light can be better blocked, thereby avoiding unnecessary visual interference; and the image display can also be clearer and has a higher contrast and color gamut.

## Description

### CROSS REFERENCES TO RELATED APPLICATION

The present invention claims priority to Chinese Patent Application No. 2023114072606, filed on October 27, 2023, entitled "black-edged display vehicle window and vehicle", the entire contents of which are incorporated herein by reference.

### TECHNICAL FIELD

The present invention relates to the field of vehicle window technology, and in particular to a black-edged display vehicle window and vehicle.

### BACKGROUND

With the evolution of the era of intelligent network connectivity, vehicles can provide various types of information to passengers, such as vehicle information, road information, social media information and the like. This can generally be achieved using vehicle head-up displays (HUDs), instrument panels, central control screens, passenger display screen, and combinations thereof, meeting diverse display needs at different manners, different distances and levels, thus providing passengers with a more comfortable, safe, and intelligent experience and a wealth of information.

Displays on instrument panels, central control screens and the like require drivers to look down, causing line of sight of the human eyes to briefly leave the road, thus creating a driving safety hazard. For conventional head-up displays (HUDs), the HUD image is displayed in the light-transmitting region of the windshield. The external environment serves as a display background for the HUD image. The brightness of the external environment and other interfering light will affect the driver's observation of the HUD image, thereby reducing driving safety and visual comfort.

### SUMMARY

According to various embodiments of the present invention, the present invention provides a black-edged display vehicle window and a vehicle.

The present invention provides a black-edged display vehicle window, which includes a glass body and at least one functional reflective member.

The glass body is provided with a light-transmitting region and a shielding region arranged circumferentially around the light-transmitting region. A visible light transmittance of the light-transmitting region is greater than or equal to 70%, and a visible light transmittance of the shielding region is less than or equal to 5%. The shielding region includes a bottom shielding region located below the light-transmitting region.

The at least one functional reflective member is provided in the bottom shielding region.

A region in the bottom shielding region provided with the functional reflective member is a display region, and the display region has a first reflectivity RL1 for projection light ray incident at an incident angle in a range from 40° to 85°. A remaining region in the bottom shielding region not provided with the functional reflective member is a non-display region, and the non-display region has a second reflectivity RL2 for visible light incident at an incident angle in a range from 0° to 8°. A ratio RL1/RL2 of the first reflectivity RL1 to the second reflectivity RL2 is ≥3.

In an embodiment, the first reflectivity RL1 is greater than or equal to 8%, and the second reflectivity RL2 is less than or equal to 6%.

In an embodiment, the first reflectivity RL1 is ≥10%, or the first reflectivity RL1 is ≥15%, or the first reflectivity RL1 is ≥20%, or the first reflectivity RL1 is ≥25%, or the first reflectivity RL1 is ≥30%.

In an embodiment, the second reflectivity RL2 is ≤4%, or the second reflectivity RL2 is ≤3%, or the second reflectivity RL2 is ≤2%, or the second reflectivity RL2 is ≤1%.

In an embodiment, RL1/RL2 ≥ 5, or RL1/RL2 ≥ 8, or RL1/RL2 ≥ 10, or RL1/RL2 ≥ 15, or RL1/RL2 ≥ 20.

In an embodiment, the shielding region further includes a left side shielding region located on a left side of the light-transmitting region, a top shielding region located above the light-transmitting region, and a right side shielding region located on a right side of the light-transmitting region. At least one of the left side shielding region, the top shielding region, and the right side shielding region is a dark ink layer.

In an embodiment, the bottom shielding region is at least one selected from a group consisting of a dark ink layer, an opaque polymer film, a dimming film, and a functional reflective member with a visible light transmittance of less than or equal to 5%.

In an embodiment, a surface roughness Ra of the dark ink layer is greater than or equal to 1 µm, or a surface roughness Ra of the dark ink layer is in a range from 2 µm to 8 µm, or a surface roughness Ra of the dark ink layer is in a range from 4.5 µm to 7 µm.

In an embodiment, the bottom shielding region is merely the dark ink layer.

In an embodiment, the bottom shielding region is a combination of the dark ink layer and at least one selected from a group consisting of the opaque polymer film, the dimming film, and the functional reflective member.

In an embodiment, an area of the opaque polymer film is greater than an area of the dark ink layer in the bottom shielding region, or an area of the dimming film is greater than an area of the dark ink layer in the bottom shielding region.

In an embodiment, the bottom shielding region is a combination of the opaque polymer film and the dimming film or the functional reflective member.

In an embodiment, the bottom shielding region is a combination of the dimming film and the functional reflective member.

In an embodiment, the functional reflective member is at least one selected from a group consisting of a diffuse reflection projection layer, a P-polarized light reflective layer, an S-polarized light reflective layer, and a mirror surface ink layer.

In an embodiment, a visible light transmittance of the diffuse reflection projection layer is less than or equal to 50%, and a haze of the diffuse reflection projection layer is in a range from 2% to 10%.

In an embodiment, a visible light transmittance of the P-polarized reflective layer is greater than or equal to 70%, and a visible light transmittance of the S-polarized reflective layer is greater than or equal to 70%.

In an embodiment, a visible light transmittance of the mirror surface ink layer is less than or equal to 5%, and a surface roughness Ra of the mirror surface ink layer is less than or equal to 0.1 µm.

The present invention provides a vehicle, which includes an image generation unit and the black-edged display vehicle window according to any one of the aforementioned embodiments. The image generation unit projects a projection light ray at an incident angle in a range from 40° to 85° onto the display region of the bottom shielding region reflects the projection light ray to form a display image.

The details of one or more embodiments of the present invention are set forth in the accompanying drawings and the description below. Other features, objects and advantages of the present invention will become apparent from the description, drawings and claims.

### BRIEF DESCRIPTION OF THE DRAWINGS

FIG. 1 is a front view of a black-edged display vehicle window according to the present invention viewed from interior of a vehicle.
FIG. 2 is a cross-sectional view of the black-edged display vehicle window according to a first embodiment of the present invention.
FIG. 3 is a partial cross-sectional view of the black-edged display vehicle window according to a second embodiment of the present invention.
FIG. 4 is a partial cross-sectional view of the black-edged display vehicle window according to a third embodiment of the present invention.
FIG. 5 is a partial cross-sectional view of the black-edged display vehicle window according to a fourth embodiment of the present invention.
FIG. 6 is a partial cross-sectional view of the black-edged display vehicle window according to a fifth embodiment of the present invention.
FIG. 7 is a partial cross-sectional view of the black-edged display vehicle window according to a sixth embodiment of the present invention.
FIG. 8 is a partial cross-sectional view of the black-edged display vehicle window according to a seventh embodiment of the present invention.

### DETAILED DESCRIPTION OF THE EMBODIMENTS

In order to make the aforementioned objects, features and advantages of the present invention more clearly understood, the specific embodiments of the present invention will be described in detail below with reference to the accompanying drawings. In the following description, numerous specific details are set forth in order to provide a thorough understanding of the present invention. However, the present invention can be implemented in many other ways different from those described herein, and those skilled in the art can make similar improvements without departing from the connotation of the present invention. Therefore, the present invention is not limited by the specific embodiments disclosed below.

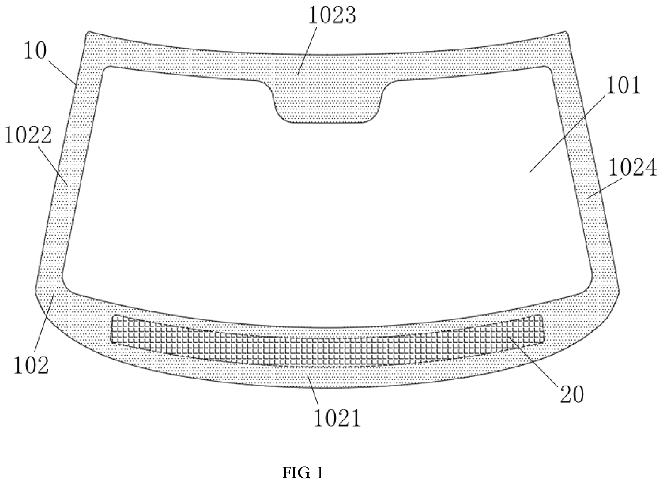

As shown in FIG. 1, the present invention provides a black-edged display vehicle window, which may be mounted on a vehicle as a windshield, a rear windshield, or a side window. The black-edged display vehicle window includes a glass body 10 and a functional reflective member 20. The glass body 10 is provided with a light-transmitting region 101 and a shielding region 102 arranged circumferentially around the light-transmitting region 101. The visible light transmittance of the light-transmitting region 101 is greater than or equal to 70%, thereby facilitating occupants inside the vehicle to observe the external environment through the light-transmitting region 101. A visible light transmittance of the shielding region 102 is less than or equal to 5%, which helps to provide shielding, protection, and enhance the overall aesthetics. The functional reflective member 20 is provided in the shielding region 102 of the glass body 10.

In FIG. 1, the shielding region 102 includes a bottom shielding region 1021 located below the light-transmitting region 101, and the functional reflective member 20 is provided in the bottom shielding region 1021. Optionally, the shielding region 102 further includes a left side shielding region 1022 located to the left of the light-transmitting region 101, a top shielding region 1023 located above the light-transmitting region 101, and a right side shielding region 1024 located to the right of the light-transmitting region 101. Preferably, a visible light transmittance of the shielding region 102 is less than or equal to 3%, more preferably less than or equal to 1%, or even equal to 0, i.e., opaque.

The present invention utilizes the functional reflective member 20 to reflect a projection light ray 301 projected by an image generation unit 30, so as to form an observable image. This allows for partial or even complete replacement of the conventional instrument panel, or even the conventional instrument panel can be omitted. This provides the driver with better visual field and allows the line of sight for longer periods of focused observation of external conditions, while also enabling easier access to necessary information for assisted driving, significantly improving driving safety. Meanwhile, the shielding region 102 is often referred to as the black-edged region, the functional reflective member 20 is positioned in the shielding region 102, particularly within the bottom shielding region 1021. This allows the shielding region 102, and especially the bottom shielding region 1021, to serve as the image display background, effectively blocking ambient light and preventing unnecessary interference on the line of sight. This also results in clearer image display with higher contrast and color gamut.

It should be noted that when in operation, the functional reflective member 20 can display vehicle driving information, various patterns, or play videos, making it suitable for various scenarios such as greeting guests, creating ambiance, watching movies, and office work. Optionally, the functional reflective member 20 is for example configured to display driving parameters, such as vehicle speed, engine speed, fuel consumption, tire pressure, warning information, mileage, etc., and may also be configured to display weather temperature, entertainment information, and for dynamic navigation, night vision, real-view maps, etc.

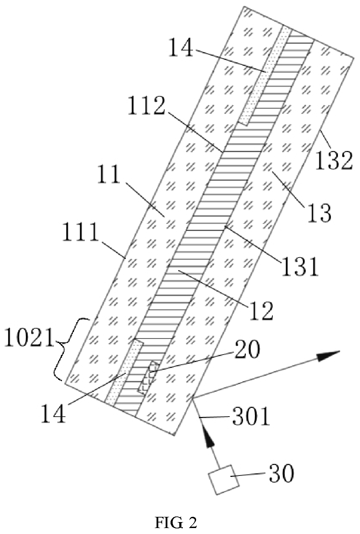

As shown in FIG. 2, in one embodiment, the black-edged display vehicle window is used as the windshield, the glass body 10 includes an outer glass plate 11, an adhesive layer 12, and an inner glass plate 13 that are stacked sequentially. The outer glass plate 11 has a first surface 111 and a second surface 112 arranged away from each other. The inner glass plate 13 has a third surface 131 and a fourth surface 132 arranged away from each other. The second surface 112 is arranged opposite to the third surface 131. The adhesive layer 12 is configured to bond the outer glass plate 11 and the inner glass plate 13 together to form a laminated glass structure. When the black-edged display vehicle window is mounted on the vehicle, the outer glass plate 11 is located on an outer side of the vehicle, and the first surface 111 is an outer surface of the black-edged display vehicle window exposed to the exterior of the vehicle. The inner glass plate 13 is located on an inner side of the vehicle, and the fourth surface 132 is an inner surface of the black-edged display vehicle window exposed to the interior of the vehicle.

The outer glass plate 11 is a transparent glass or a tinted glass, and the outer glass plate 11 has a thickness in a range from 0.7mm to 4mm and a visible light transmittance greater than 70%. The inner glass plate 13 is also a transparent or a tinted glass, and the inner glass plate 13 a thickness in a range from 0.7mm to 4mm and a visible light transmittance greater than 70%. A total iron content (as Fe₂O₃) of the transparent glass is less than or equal to 0.1%, even less than or equal to 0.05%, and further less than or equal to 0.01%, and a visible light transmittance of the transparent glass is in a range from 80% to 95%. A total iron content (as Fe₂O₃) of the tinted glass is in a range from 0.1% to 0.8%, even in a range from 0.1% to 0.5%, and a visible light transmittance of the tinted glass is in a range from 75% to 90%. For example, the outer glass plate 11 may be a transparent glass with a thickness of 2.1 mm and a visible light transmittance of 89%, and an inner glass plate 13 may be a green glass with a thickness of 1.6 mm and a visible light transmittance of 83%, or a green glass with a thickness of 2.1 mm and a visible light transmittance of 80%.

The adhesive layer 12 is a transparent or tinted thermoplastic polymer film, and a thickness of the adhesive layer 12 is in a range from 0.38 mm to 2.28 mm. For example, the thickness of the adhesive layer 12 may be, but is not limited to, 0.38 mm, 0.76 mm, 1.14 mm, 1.52 mm, 1.9 mm, 2.28 mm, or other values in a range from 0.38 mm to 2.28 mm. The material of the thermoplastic polymer film may be at least one selected from a group consisting of polyvinyl butyral (PVB), polyurethane (PU), ethylene-vinyl acetate copolymer (EVA), and ionomer polymers (SGP). When the adhesive layer 12 is a transparent thermoplastic polymer, the visible light transmittance of the transparent thermoplastic polymer is greater than or equal to 80%. For example, the visible light transmittance of the adhesive layer 12 may be, but is not limited to, 80%, 85%, 90%, or 95%. When the adhesive layer 12 is a colored thermoplastic polymer film, the visible light transmittance of the colored thermoplastic polymer film is greater than 70%. For example, the visible light transmittance of the adhesive layer 12 may be, but is not limited to, 75%, 80%, 85%, or 90%. The colored thermoplastic polymer film may be a gray, green, or blue thermoplastic polymer film.

In some embodiments, the left side shielding region 1022, the top shielding region 1023, and the right side shielding region 1024 are all dark ink layers 14. Ceramic ink or ultraviolet ink is printed onto the second surface 112 using processes such as screen printing, inkjet printing and the like, and then cured or sintered at high temperature to form the dark ink layer 14. The dark ink layer 14 is arranged around the perimeter region of the second surface 112. It should be understood that the dark ink layer 14 may be located only on the third surface 131, or only on the fourth surface 132, or simultaneously on the second surface 112 and the fourth surface 132, or simultaneously on the second surface 112 and the third surface 131, or simultaneously on the third surface 131 and the fourth surface 132, or simultaneously on the second surface 112, the third surface 131, and the fourth surface 132. To avoid mirror reflections in the left side shielding region 1022, the top shielding region 1023, and the right side shielding region 1024 that could interfere with the visual field of occupants inside the vehicle, a surface roughness Ra of the dark ink layer 14 is preferably greater than or equal to 1 µm, for example, 1.1 µm, 1.2 µm, 1.3 µm, 1.4 µm, 1.5 µm, 1.8 µm, 2.0 µm, 2.5 µm, 3.0 µm, 3.5 µm, 4.0 µm, 4.5 µm, 5.0 µm, 5.5 µm, 6.0 µm, 6.5 µm, 7.0 µm, 7.5 µm, 8.0 µm, 8.5 µm, 9.0 µm, 9.5 µm, 10 µm, etc. Considering production costs and printing process convenience, the surface roughness Ra of the dark ink layer 14 in a range from 2 µm to 8 µm is more preferred, and the surface roughness Ra of the dark ink layer 14 in a range from 4.5 µm to 7 µm is even more preferred. The surface roughness Ra value is measured using a surface roughness tester.

In the present invention, a region in the bottom shielding region 1021 provided with the functional reflective member 20 is a display region, while a remaining region in the bottom shielding region 1021 without the functional reflective member 20 is a non-display region. When the image generation unit 30 projects a projection light ray 301 onto the display region at an incident angle in a range from 40° to 85°, the display region can reflect the incident projection light ray 301 into the eyes of occupants inside the vehicle, thereby forming a display image. The display region has a first reflectivity RL1 greater than or equal to 8% for the incident projection light ray 301. Since the bottom shielding region 1021 serves as a display background for the display image, a clear display image can be obtained while reducing the power consumption of the image generation unit 30 to prevent the image generation unit 30 from overheating, thereby reducing the unit and volume of the image generation unit 30, which is beneficial for design optimization and cost reduction. Preferably, the first reflectivity RL1 is greater than or equal to 10%, which may be, for example, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, etc., more preferably greater than or equal to 15%, even more preferably greater than or equal to 20%, even greater than or equal to 25%, and even more preferably greater than or equal to 30%.

In some embodiments, to reduce the interference of specular reflections generated by the non-display region in the bottom shielding region 1021 to the display image generated by the display region, the non-display region has a second reflectivity RL2 for visible light incident at an incident angle of 0° to 8°. Preferably, a ratio of the first reflectivity RL1 to the second reflectivity RL2 is greater than or equal to 3, i.e., RL1/RL2 ≥ 3. Examples of specific ratios include 3, 4, 5, 6, 7, 8, 9, 10, 11, 12, 13, 14, 15, 16, 17, 18, 19, and 20. More preferably, the ratio of the first reflectivity RL1 to the second reflectivity RL2 is greater than or equal to 5, further preferably greater than or equal to 8, even more preferably greater than or equal to 10, even greater than or equal to 15, and even more preferably greater than or equal to 20. Specifically, the second reflectivity RL2 is less than or equal to 6%, preferably less than or equal to 4%, more preferably less than or equal to 3%, even more preferably less than or equal to 2%, and even more preferably less than or equal to 1%. The first reflectivity RL1 and the second reflectivity RL2 may be measured according to Chinese standard GB9656.

The image generation unit 30 is configured to generate the projection light ray 301, which includes at least one selected from a group consisting of P-polarized light, circularly polarized light, and unpolarized light. Preferably, the projection light ray 301 includes at least 30% P-polarized light, thus ensuring that occupants inside the vehicle wearing polarized sunglasses can still clearly see the display image. Specifically, the projection light ray 301 may include 30%, 40%, 50%, 60%, 70%, 80%, 90%, 95%, or even 100% P-polarized light. The image generation unit 30 may be a projector mounting inside the dashboard, with the optical path designed to display the display image at a distance in a range from 0 to 5 meters in front of the black-edged display vehicle window. The image generation unit 30 may also be a display screen mounted on the top surface of the dashboard, with the optical path designed to display the display image at a distance in a range from 0 to 0.5 meters in front of the black-edged display vehicle window. In the present invention, displaying the display image at 0 meters in front of the black-edged display vehicle window can be understood as displaying the display image directly on the black-edged display vehicle window. Specifically, the display screen may be exemplified by a thin-film transistor display (TFT), an organic light-emitting diode display (OLED), a silicon-based liquid crystal display screen (LCOS), a digital light processing display (DLP), a sub-millimeter light-emitting diode display (Mini LED), a micro light-emitting diode display (Micro LED) and the like.

In some embodiments, the functional reflective member 20 may be a diffuse reflection projection layer, which has a reflectivity of at least 8% for the projection light ray 301 generated by the image generation unit 30. The projection light ray 301 forms the display image on the diffuse reflection projection layer, which is then directly displayed on the black-edged display vehicle window. The diffuse reflection projection layer can achieve nearly uniform reflection in all directions according to the Lambertian model, or it can preferentially have the highest reflectivity in a direction observed by occupants inside the vehicle. The diffuse reflection projection layer may be exemplified by a black scattering coating, a white screen, a transparent scattering layer element and the like. The diffuse reflection projection layer may be provided on the second surface 112, or between the second surface 112 and the third surface 131, or on the third surface 131, or on the fourth surface 132. Preferably, a visible light transmittance of the diffuse reflection projection layer is less than or equal to 50%, specifically examples being 50%, 40%, 30%, 20%, 10%, 5%, 4%, 3%, 2%, 1%, and 0%. More preferably, the visible light transmittance of the diffuse reflection projection layer is less than or equal to 5%, thereby allowing the diffuse reflection projection layer to be used as part of the bottom shielding region 1021. Preferably, a haze of the diffuse reflection projection layer is in a range from 2% to 10%, specifically examples being 3%, 4%, 5%, 6%, 7%, 8%, 9%, and 10%.

In some embodiments, the functional reflective member 20 may be a P-polarized light reflective layer configured to increase the reflectivity of the display region to P-polarized light, making the reflectivity of the display region to P-polarized light greater than or equal to 8%. Examples of P-polarized light reflective layers include high-low refractive index stacks, metal stacks, polyethylene terephthalate (PET) stacks and the like. The visible light transmittance of the P-polarized light reflective layer is greater than or equal to 70%. The P-polarized light reflective layer may be provided on the second surface 112, or between the second surface 112 and the third surface 131, or on the third surface 131, or on the fourth surface 132.

In some embodiments, the functional reflective member 20 may be a S-polarized light reflective layer configured to increase the reflectivity of the display region to S-polarized light, making the reflectivity of the display region to S-polarized light greater than or equal to 8%. Examples of S-polarized light reflective layers include high-low refractive index stacks, metal stacks, and the like. The visible light transmittance of the S-polarized reflective layer is greater than or equal to 70%. To avoid ghosting of the display image, the S-polarized reflective layer is provided on the fourth surface 132.

In some embodiments, the functional reflective member 20 may be a mirror surface ink layer configured to increase the reflectivity of the display region to the projection light ray 301, making the reflectivity of the display region to the projection light ray 301 greater than or equal to 8%, and the visible light transmittance of the mirror surface ink layer less than or equal to 5%, specifically 5%, 4%, 3%, 2%, 1%, or 0%, thereby allowing the mirror ink layer to be used as part of the bottom shielding region 1021. The mirror surface ink layer may be provided on the second surface 112, or between the second surface 112 and the third surface 131, or on the third surface 131, or on the fourth surface 132. Preferably, a surface roughness Ra of the mirror surface ink layer is less than or equal to 0.1 µm, more preferably less than or equal to 0.05 µm, and even more preferably less than or equal to 0.025 µm.

In some embodiments, the bottom shielding region 1021 is at least one selected from a group consisting of a dark ink layer, an opaque polymer film, a dimming film, and the functional reflective member with visible light transmittance less than or equal to 5%. The dark ink layer may form the bottom shielding region 1021 independently, or may be combined with the opaque polymer film, the dimming film, or the functional reflective member to form the bottom shielding region 1021. The opaque polymer film may form the bottom shielding region 1021 independently, or may be combined with the dark ink layer, the dimming film, or the functional reflective member to form the bottom shielding region 1021. The dimming film is preferably combined with the dark ink layer or the opaque polymer film to form the bottom shielding region 1021. The functional reflective member with a visible light transmittance of less than or equal to 5% is preferably combined with the dark ink layer or the opaque polymer film to form the bottom shielding region 1021. Specific details may be flexibly adjusted and configured according to actual needs. The bottom shielding region 1021 may be used as the display background for the display image, preventing interference from the brightness of the external environment and improving the display effect of the functional reflective member 20.

The opaque polymer film may be a bulk-colored polymer film, such as by adding black or brown coloring components during the manufacturing process of the polymer film; or the opaque polymer film may be also be a polymer film with surface-printed inks or pigments, such as printing black ink or brown pigments onto a surface of the polymer film; or the opaque polymer film may be a dyed or colored polymer film, such as coloring the polymer film with black or brown dyes. The material of the polymer film may be polyvinyl butyral (PVB), polyethylene terephthalate (PET), polyvinyl chloride (PVC), polycarbonate (PC), polymethyl methacrylate (PMMA), etc. Preferably, the thickness of the opaque polymer film is less than or equal to 0.3 mm, specifically examples being 0.3 mm, 0.25 mm, 0.2 mm, 0.15 mm, 0.1 mm, 0.08 mm, 0.05 mm, 0.02 mm, etc., such that the opaque polymer film has a minimal impact on the overall thickness of the laminated glass structure. More preferably, it is less than or equal to 0.1 mm, and even more preferably, it is less than or equal to 0.05 mm.

The dimming film may be a polymer-dispersed liquid crystal film (PDLC), a suspended particle film (SPD), an electrochromic film (EC), a dye liquid crystal film (LC), and the like. The minimum visible light transmittance of the dimming film is less than or equal to 5%, for example, 3%, 2%, 1%, 0.5%, or 0%. Furthermore, the maximum visible light transmittance of the dimming film is set as needed, for example, 10%, 20%, 30%, 50%, 70%, 80%, etc. Specifically, the visible light transmittance of the dimming film may be adjusted between 0% and 20%, between 0.5% and 50%, or between 0% and 70%, etc. The dimming film may meet the visible light transmittance requirements of various scenarios. For example, when black-edged display is needed, the dimming film is in an opaque state (visible light transmittance less than or equal to 5%, or even 0%), improving the contrast between the display image and the display background. When no display is needed, the dimming film is in a transparent state (visible light transmittance greater than or equal to 70%), achieving greater transparency of the glass body 10.

The functional reflective member with a visible light transmittance of 5% or less can serve as part of the bottom shielding region 1021 while simultaneously achieving image display, thus facilitating the combined design of the bottom shielding region 1021 and the functional reflective member.

In FIG. 2, the bottom shielding region 1021 is the dark ink layer 14 provided on the second surface 112, and the functional reflective member 20 is provided on the third surface 131. A projection of the dark ink layer 14 onto the third surface 131 completely covers the functional reflective member 20. When the functional reflective member 20 performs image display, the dark ink layer 14 serves as the display background for the display image, thus effectively blocking ambient light and preventing unnecessary interference with the line of sight. This also results in a clearer image display and achieves higher contrast and color gamut.

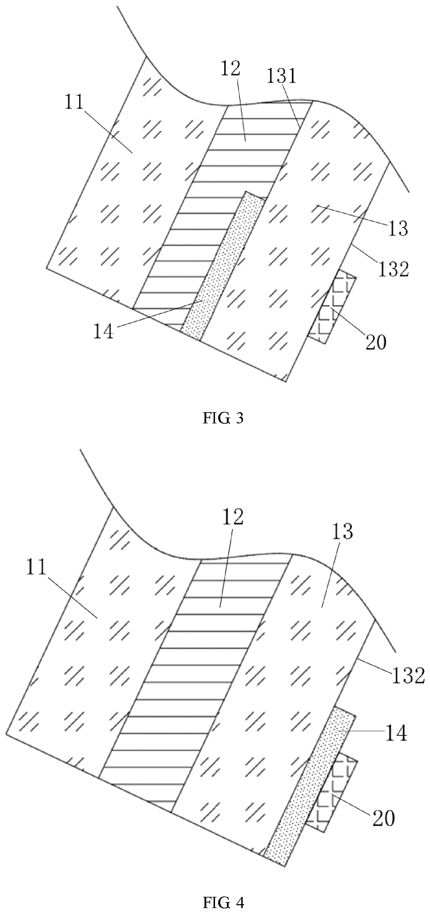

As shown in FIG. 3, the bottom shielding region 1021 is the dark ink layer 14 provided on the third surface 131, and the functional reflective member 20 is provided on the fourth surface 132. The projection of the dark ink layer 14 onto the fourth surface 132 completely covers the functional reflective member 20. When the functional reflective member 20 performs image display, the dark ink layer 14 serves as the display background for the image displayed, effectively blocking ambient light and preventing unnecessary interference with the viewer's line of sight. This also results in a clearer image display and achieves higher contrast and color gamut.

As shown in FIG. 4, the bottom shielding region 1021 is the dark ink layer 14 provided on the fourth surface 132, and the functional reflective member 20 is provided on the dark ink layer 14. The dark ink layer 14 completely covers the projection of the functional reflective member 20 onto the fourth surface 132. When the functional reflective member 20 performs image display, the dark ink layer 14 serves as the display background for the image displayed, thus effectively blocking ambient light and preventing unnecessary interference with the viewer's line of sight. This also results in a clearer image display and achieves higher contrast and color gamut.

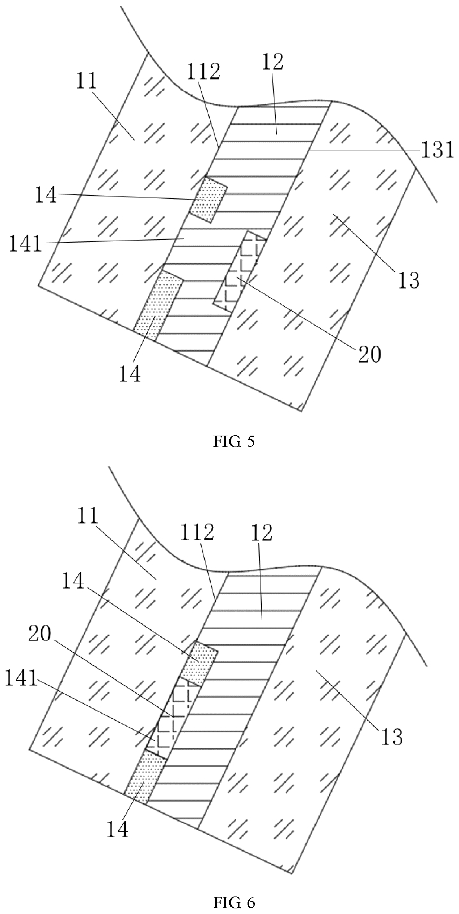

As shown in FIG. 5, the bottom shielding region 1021 is a combination of the dark ink layer 14 and the functional reflective member 20 with a visible light transmittance less than or equal to 5%. The dark ink layer 14 is provided on the second surface 112, and the functional reflective member 20 with a visible light transmittance of less than or equal to 5% is provided on the third surface 131. The dark ink layer 14 has a hollow region 141, and the dark ink layer 14 and the functional reflective member 20 are partially overlapped. An area of the functional reflective member 20 is greater than an area of the hollow region 141. The functional reflective member 20 can both display images and serve as part of the background for the display image. The dark ink layer 14 serves as the other part of the background for the display image, which is more conducive to the combined design of the bottom shielding region 1021 and the functional reflective member. Furthermore, the use of the dark ink layer 14 in the bottom shielding region 1021 is reduced, and the difficulty of the printing process is further reduced and the bending and forming quality of the outer glass plate 11 is improved.

As shown in FIG. 6, the bottom shielding region 1021 is a combination of the dark ink layer 14 and the functional reflective member 20 with visible light transmittance of less than or equal to 5%. The dark ink layer 14 and the functional reflective member 20 are simultaneously provided on the second surface 112. The dark ink layer 14 has a hollow region 141, and the functional reflective member 20 is located in the hollow region 141. The functional reflective member 20 can both display images and serve as the display background for the display image. The dark ink layer 14, acting as a shield around the functional reflective member 20, facilitates the combined design of the bottom shielding region 1021 and the functional reflective member. Furthermore, the use of the dark ink layer 14 in the bottom shielding region 1021 is reduced, and the difficulty of the printing process is further reduced and the bending and forming quality of the outer glass plate 11 is improved. It should be understood that the dark ink layer 14 and the functional reflective member 20 are also simultaneously provided on the third surface 131 or on the fourth surface 132.

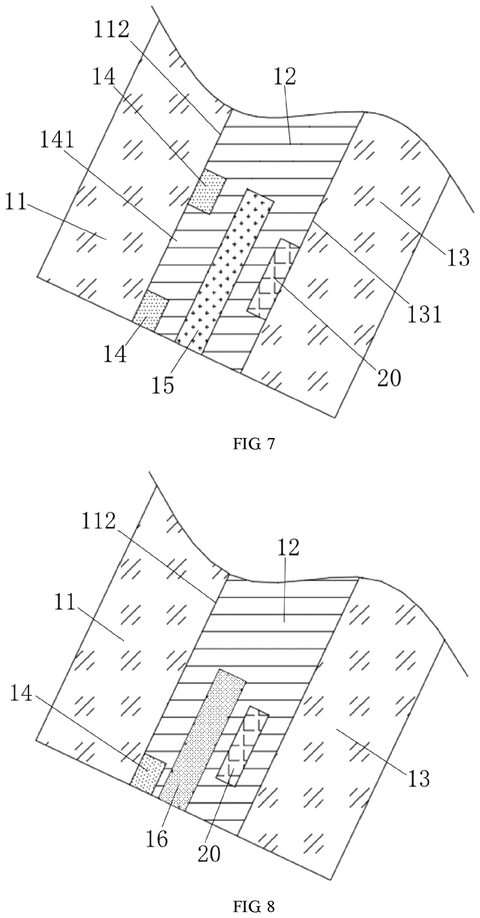

As shown in FIG. 7, the bottom shielding region 1021 is a combination of the dark ink layer 14 and the opaque polymer film 15. The dark ink layer 14 is provided on the second surface 112, the opaque polymer film 15 is provided in the adhesive layer 12, and the functional reflective member 20 is provided on the third surface 131. The dark ink layer 14 has a hollow region 141. The opaque polymer film 15 and the functional reflective member 20 are partially overlapped, and an area of the opaque polymer film 15 is greater than an area of the hollow region 141. The projection of the combination of the dark ink layer 14 and the opaque polymer film 15 onto the third surface 131 completely covers the functional reflective member 20. When the functional reflective member 20 displays an image, the dark ink layer 14, together with the opaque polymer film or the dimming film 15, serves as the display background for the display image, effectively blocking ambient light and preventing unnecessary interference with the viewer's line of sight. This also results in a clearer image display and achieves higher contrast and color gamut.

Furthermore, the use of the dark ink layer 14 in the bottom shielding region 1021 is reduced, and the difficulty of the printing process is further reduced and the bending and forming quality of the outer glass plate 11 is improved. Preferably, an area of the opaque polymer film 15 is greater than an area of the dark ink layer 14 in the bottom shielding region 1021.

As shown in FIG. 8, the bottom shielding region 1021 is a combination of the dark ink layer 14 and the dimming film 16. The dark ink layer 14 is provided on the second surface 112. The dimming film 16 and the functional reflective member 20 are provided in the adhesive layer 12. The functional reflective member 20 is located between the dimming film 16 and the third surface 131. At least a portion of the dark ink layer 14 is overlapped with the dimming film 16. The projection of the combination of the dark ink layer 14 and the dimming film 16 on the third surface 131 completely covers the projection of the functional reflective member 20 on the third surface 131. When the functional reflective member 20 performs image display, the visible light transmittance of the dimming film 16 is less than or equal to 5%, or is even 0%. The dark ink layer 14 and the dimming film 16 together serve as the display background for the display image, effectively blocking ambient light and preventing unnecessary interference with the viewer's line of sight. This also results in a clearer image display and achieves higher contrast and color gamut. When the functional reflective member 20 does not display an image, the visible light transmittance of the dimming film 16 is greater than 5%, preferably greater than or equal to 10%, more preferably greater than or equal to 20%, further preferably greater than or equal to 50%, and even greater than or equal to 70%. This allows for greater transparency of the glass body 10, providing a wider visual field for occupants inside the vehicle. Furthermore, the use of the dark ink layer 14 in the bottom shielding region 1021 is reduced, and the difficulty of the printing process is further reduced and the bending and forming quality of the outer glass plate 11 is improved. Preferably, an area of the dimming film 16 is greater than an area of the dark ink layer 14 in the bottom shielding region 1021.

The present invention also provides a vehicle, including an image generation unit 30 and the black-edged display vehicle window as described in any of the aforementioned embodiments. The image generation unit 30 can project the projection light ray 301 at an incident angle of 40° to 85° onto the display region in the bottom shielding region 1021. The display region reflects the incident projection light ray 301 into the eyes of occupants inside the vehicle, thereby forming the display image.

When the black-edged display vehicle window is mounted on the vehicle, it is preferably used as the vehicle's windshield, which is not limited to hereto. The black-edged display vehicle window may also be used as a rear windshield or a side window, thus providing more display application scenarios for the vehicle.

The vehicle in the present invention may be, but is not limited to, sedans, multi-purpose vehicles (MPVs), sport/suburban utility vehicles (SUVs), off-road vehicles (ORVs), pickup trucks, vans, buses, and trucks, etc.

The above embodiments merely illustrates several embodiments of the present invention, and the description thereof is specific and detailed, but it shall not be constructed as limiting the scope of the disclosure. It should be noted that, for a person of ordinary skill in the art, several variations and improvements may be made without departing from the concept of the present invention, and these are all within the protection scope of the present invention. Therefore, the protection scope of the present invention shall be subject to the appended claims.

## Claims

1. A black-edged display vehicle window, comprising:
a glass body provided with a light-transmitting region and a shielding region arranged circumferentially around the light-transmitting region, a visible light transmittance of the light-transmitting region being greater than or equal to 70%, a visible light transmittance of the shielding region being less than or equal to 5%, the shielding region comprising a bottom shielding region located below the light-transmitting region; and
at least one functional reflective member provided in the bottom shielding region;
wherein a region in the bottom shielding region provided with the functional reflective member is a display region, the display region has a first reflectivity RL1 for projection light ray incident at an incident angle in a range from 40° to 85°, a remaining region in the bottom shielding region not provided with the functional reflective member is a non-display region, the non-display region has a second reflectivity RL2 for visible light incident at an incident angle in a range from 0° to 8°, and a ratio RL1/RL2 of the first reflectivity RL1 to the second reflectivity RL2 is ≥3.

2. The black-edged display vehicle window according to claim 1, wherein the first reflectivity RL1 is greater than or equal to 8%, and the second reflectivity RL2 is less than or equal to 6%.

3. The black-edged display vehicle window according to claim 1 or 2, wherein the first reflectivity RL1 is ≥10%, or the first reflectivity RL1 is ≥15%, or the first reflectivity RL1 is ≥20%, or the first reflectivity RL1 is ≥25%, or the first reflectivity RL1 is ≥30%.

4. The black-edged display vehicle window according to any one of claims 1 to 3, wherein the second reflectivity RL2 is ≤4%, or the second reflectivity RL2 is ≤3%, or the second reflectivity RL2 is ≤2%, or the second reflectivity RL2 is ≤1%.

5. The black-edged display vehicle window according to any one of claims 1 to 4, wherein RL1/RL2 ≥ 5, or RL1/RL2 ≥ 8, or RL1/RL2 ≥ 10, or RL1/RL2 ≥ 15, or RL1/RL2 ≥ 20.

6. The black-edged display vehicle window according to any one of claims 1 to 5, wherein the shielding region further comprises a left side shielding region located on a left side of the light-transmitting region, a top shielding region located above the light-transmitting region, and a right side shielding region located on a right side of the light-transmitting region, and at least one of the left side shielding region, the top shielding region, and the right side shielding region is a dark ink layer.

7. The black-edged display vehicle window according to any one of claims 1 to 6, wherein the bottom shielding region is at least one selected from a group consisting of a dark ink layer, an opaque polymer film, a dimming film, and the functional reflective member with a visible light transmittance of less than or equal to 5%.

8. The black-edged display vehicle window according to claim 6 or 7, wherein a surface roughness Ra of the dark ink layer is greater than or equal to 1 µm, or a surface roughness Ra of the dark ink layer is in a range from 2 µm to 8 µm, or a surface roughness Ra of the dark ink layer is in a range from 4.5 µm to 7 µm.

9. The black-edged display vehicle window according to claim 7, wherein the bottom shielding region is merely the dark ink layer.

10. The black-edged display vehicle window according to claim 7, wherein the bottom shielding region is a combination of the dark ink layer and at least one selected from a group consisting of the opaque polymer film, the dimming film, and the functional reflective member.

11. The black-edged display vehicle window according to claim 10, wherein an area of the opaque polymer film is greater than an area of the dark ink layer in the bottom shielding region, or an area of the dimming film is greater than an area of the dark ink layer in the bottom shielding region.

12. The black-edged display vehicle window according to claim 7, wherein the bottom shielding region is a combination of the opaque polymer film and the dimming film or the functional reflective member.

13. The black-edged display vehicle window according to claim 7, wherein the bottom shielding region is a combination of the dimming film and the functional reflective member.

14. The black-edged display vehicle window according to any one of claims 1 to 13, wherein the functional reflective member is at least one selected from a group consisting of a diffuse reflection projection layer, a P-polarized light reflective layer, an S-polarized light reflective layer, and a mirror surface ink layer.

15. The black-edged display vehicle window according to claim 14, wherein a visible light transmittance of the diffuse reflection projection layer is less than or equal to 50%, and a haze of the diffuse reflection projection layer is in a range from 2% to 10%.

16. The black-edged display vehicle window according to claim 14 or 15, wherein a visible light transmittance of the P-polarized reflective layer is greater than or equal to 70%, and a visible light transmittance of the S-polarized reflective layer is greater than or equal to 70%.

17. The black-edged display vehicle window according to any one of claims 14 to 16, wherein a visible light transmittance of the mirror surface ink layer is less than or equal to 5%, and a surface roughness Ra of the mirror surface ink layer is less than or equal to 0.1 µm.

18. A vehicle, comprising an image generation unit and the black-edged display vehicle window according to any one of claims 1 to 17, wherein the image generation unit projects a projection light ray at an incident angle in a range from 40° to 85° onto the display region of the bottom shielding region, and the display region reflects the projection light ray to form a display image.
